(19) Europäisches Patentamt
European Patent Office
Office européen des brevets

(11) **EP 2 002 285 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(51) Int Cl.:
**G01S 17/58** *(2006.01)* **G01S 7/481** *(2006.01)*
**G01P 3/36** *(2006.01)* **B65H 61/00** *(2006.01)*

(21) Anmeldenummer: **07723833.5**

(22) Anmeldetag: **30.03.2007**

(86) Internationale Anmeldenummer:
**PCT/EP2007/002891**

(87) Internationale Veröffentlichungsnummer:
**WO 2007/112980 (11.10.2007 Gazette 2007/41)**

(54) **VERFAHREN UND ANORDNUNG ZUR ERZEUGUNG EINES VERGRÖSSERTEN MESSVOLUMENS ZUR BESTIMMUNG DER STRUKTUR UND/ODER SPULGESCHWINDIGKEIT TEXTILER FASERN AUF BASIS DER LASER-DOPPLER-ANEMOMETRIE**

METHOD AND ARRANGEMENT FOR PRODUCING AN ENLARGED MEASUREMENT VOLUME FOR THE PURPOSE OF DETERMINING THE STRUCTURE AND/OR WINDING SPEED OF TEXTILE FIBRES ON THE BASIS OF LASER DOPPLER ANEMOMETRY

PROCEDE ET SYSTEME DE CREATION D'UN VOLUME DE MESURE AGRANDI EN VUE DE DETERMINER LA STRUCTURE ET/OU LA VITESSE DE BOBINES DE FIBRES TEXTILES PAR ANEMOMETRIE LASER A EFFET DOPPLER

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.03.2006 DE 102006015170**

(43) Veröffentlichungstag der Anmeldung:
**17.12.2008 Patentblatt 2008/51**

(73) Patentinhaber: **Vienco GmbH**
**41238 Mönchengladbach (DE)**

(72) Erfinder:
• **HERMANNS, Ferdinand, Josef**
**41812 Erkelenz (DE)**
• **KOHNS, Peter**
**53179 Bonn (DE)**
• **LINDEN, Martin**
**D-47877 Willich-Neersen (DE)**

(74) Vertreter: **Schrooten, Rolf**
**BPSH**
**Patent- & Rechtsanwälte**
**Mörsenbroicher Weg 191**
**40470 Düsseldorf (DE)**

(56) Entgegenhaltungen:
**EP-A- 0 838 695     DE-A1- 10 342 383**

• **DUBBELDAM G C: "THE CONTACTLESS DETERMINATION OF YARN SPEED WITH A LASER-DOPPLER VELOCITY METER" JOURNAL OF THE TEXTILE INSTITUTE, WOODHEAD PUBLISHING LIMITED, CAMBRIDGESHIRE, GB, Bd. 65, 1974, Seiten 483-487, XP001203869 ISSN: 0040-5000**

**Beschreibung**

Die vorliegende Erfindung betrifft ein Verfahren nach dem Oberbegriff von Anspruch 1 sowie eine Anordnung nach dem Oberbegriff von Anspruch 10. Derartige Verfahren und Anordnungen sind aus der DE 103 42 383 A1 bekannt. Sie dienen dem berührungslosen Bestimmen der Struktur und/oder der Geschwindigkeit eines laufenden Fadens im Fadenlauf einer Textilmaschine, insbesondere einer Spinnmaschine oder einer Spulmaschine. Vorzugsweise wird das Verfahren bei Spulstellen von Textilmaschinen angewendet.

Spulstellen moderner Textilmaschinen, beispielsweise zur Erzeugung von Kreuzspulen, sind mit Einrichtungen für die Geschwindigkeitsmessung und die Längenmessung des laufenden Fadens ausgerüstet. Ständig steigende Anforderungen an die Qualität des Garns haben zur Überwachung von Parametern der Garnstruktur wie z.B. dem Garndurchmesser nicht nur an ausgewählten Spulstellen, sondern an jeder einzelnen Spulstelle geführt. Bei der Überwachung des Garndurchmessers wird für die Bewertung, ob eine Abweichung vom Sollgarndurchmesser als Garnfehler einzustufen ist, üblicherweise auch die Länge der Abweichung herangezogen. Die Ermittlung der genauen Fehlerlänge ist daher ein wesentlicher Bestandteil der Qualitäts-überwachung des Garns.

Klassische mechanische Messverfahren zur Geschwindigkeitsmessung des laufenden Fadens arbeiten mit abrollenden Messrädern. Mit dem Auftreten von Schlupf ist jedoch Reibung zwischen dem Garn und der Oberfläche des Messrades verbunden. Neben der durch den Schlupf entstehenden Messungenauigkeit können durch die Reibung bei empfindlichen Fäden nachteilige Qualitätsbeeinträchtigungen auftreten. Um derartige Nachteile zu vermeiden, ist es bekannt, berührungslose Messverfahren in der Textilindustrie einzusetzen.

So ist aus der DE 42 25 842 A1 eine Vorrichtung zum Messen der Geschwindigkeit von laufenden Textilfäden an einer Wickeleinrichtung bekannt, die nach dem sogenannten Korrelationsmessverfahren arbeitet. Dabei werden die Messwerte von zwei in festem Abstand in Bewegungsrichtung des Textilfadens hintereinander angeordneten Sensoren über einen Laufzeitkorrelator ausgewertet, um daraus die Fadengeschwindigkeit zu bestimmen. Die beiden Sensoren arbeiten berührungsfrei und können zum Beispiel auf optischer oder kapazitiver Basis arbeiten.

Ferner ist zur berührungslosen Geschwindigkeitsmessung der Einsatz der Laser-Doppler-Anemometrie (nachfolgend LDA genannt) bekannt. Das Grundprinzip der LDA beruht auf der indirekten Messung der Doppler-Verschiebung (Verschiebung der Lichtfrequenz) an bewegten streuenden Teilchen. Es handelt sich dabei um ein punktorientiertes berührungsloses optischen Verfahren aus der Lasermesstechnik. Beim Doppler-Effekt tritt eine Frequenzverschiebung auf, die von der Relativgeschwindigkeit abhängt, mit der sich Sender und Empfänger relativ zueinander bewegen. Durch Auswertung der Frequenzverschiebung lässt sich somit die Geschwindigkeit eines bewegten Körpers bei ortsfestem Empfänger bestimmen.

Bei der LDA-Technik tritt ein zweifacher Dopplereffekt auf. Die sich hierbei durch Überlagerung ergebende Schwebung der beiden Dopplerfrequenzen ist direkt proportional zur Teilchengeschwindigkeit. Durch den direkten proportionalen Zusammenhang ist dieses Messverfahren kalibrierungsfrei, was einen großen Vorteil der LDA-Technik darstellt.

Grundsätzlich lassen sich zwei an sich bekannte LDA-Verfahren voneinander unterscheiden. Einerseits das Referenzstrahlverfahren und andererseits das Zweistrahlverfahren, wobei sich letzteres in der Praxis durchgesetzt hat. Beide Verfahren basieren auf dem Doppler-Effekt.

Beim Referenzstrahl-LDA-Verfahren wird mit einem Referenzstrahl und einem Streustrahl gearbeitet, wobei letzterer auch Messstrahl oder Hauptstrahl genannt wird. Dabei überlagern sich im Empfänger die in der Frequenz nicht verschobene Referenzwelle und das reflektierte Streulicht des entsprechend des Doppler-Effekts verschobenen Streustrahls. Das Referenzstrahlverfahren in seiner bisher bekannten Ausführungsweise weist allerdings die Eigenschaft auf, dass die Intensität des Referenzstrahls und die Intensität des von der Oberfläche reflektierten Streustrahls üblicherweise im Verhältnis 5:95 deutlich voneinander abweichen, um ein gutes "Signal-zu-Rausch-Verhältnis" zu erhalten.

Bei dem Zweistrahl-LDA-Verfahren in seiner bisher bekannten Ausführungsweise wird ein Laserstrahl mit Hilfe eines Strahlteilers in zwei parallele Teilstrahlen gleicher Intensität aufgeteilt. Diese Teilstrahlen werden anschließend mit einer Optik, insbesondere mittels einer Sammellinse fokussiert. Dadurch überlagern sich die beiden Teilstrahlen in der Brennebene. Der Schnittpunkt bildet das Messvolumen, in dem die Geschwindigkeit der Partikel durch Messung des Streulichts bestimmt wird. Das Streulicht wird durch eine Abbildungsoptik mit Hilfe eines Fotodetektors aufgenommen und durch eine geeignete Elektronik ausgewertet. Die Abbildungsoptik besteht im simpelsten Fall aus einer einfachen Fokussierlinse. Je nach Aufbau kann die Optik mit einer Blende zum Abschotten der beiden Teilstrahlen und mit einem Raumfilter erweitert werden.

Aus der EP 0 838 695 A1 ist ein Zweistrahl-LDA-Verfahren zur Geschwindigkeitsmessung bekannt, bei dem mittels eines Kösterprismas, also mittels eines aus zwei Teilprismen zusammengesetzten Prismas, ein Laserstrahl in zwei Teilstrahlen gleicher Intensität aufgeteilt wird, die sich am Messobjekt kreuzen. Das bewegte Messobjekt ist hier ein flächiger Gegenstand, auf dessen Oberfläche die beiden Teilstrahlen vollständig auftreffen und größtenteils reflektiert werden, wobei das reflektierte Laserlicht zur weiteren Auswertung von einem optischen Detektor erfasst wird.

Für die Applikation eines LDA-Sensors zur Messung der Geschwindigkeit und/oder der Länge textiler Fäden gelten hingegen besondere Anforderungen. Hierbei müssen im Gegensatz zur Geschwindigkeitsmessung von bewegten Flächen, die im Verhältnis zu den Querdimensionen der Laserstrahlen groß sind, die Abmessungen des sogenannten Messvolumens, durch das der zu vermessende Faden hindurchgeführt wird, so groß gewählt werden, dass die durch den Spulprozess hervorgerufenen Unregelmäßigkeiten, beispielsweise Wellen, Bäuche sowie abstehende Filamente des laufenden Fadens, nicht zum Signalausfall führen. Wünschenswert wäre daher ein Messvolumen mit einem Durchmesser von mindestens 2 mm.

Aufgrund der Notwendigkeit von fokussierenden Optikelementen bei den bisher beispielsweise aus der DE 103 42 383 A1 bekannten LDA-Verfahren beträgt der maximale Durchmesser des bisher erreichbaren Messvolumens jedoch nur einige 10 μm. Ein derartiges sehr kleines Messvolumen hat den Nachteil, dass der zu erfassende Faden relativ häufig aus dem Messvolumen herausfällt, was somit zu Instabilitäten des Messvorgangs führt.

Um den gewünschten Mindestdurchmesser des Messvolumens von 2 mm mit den bisher beispielsweise aus der DE 103 42 383 A1 bekannten LDA-Verfahren bei einem Laserstrahldurchmesser von 3 mm und einer Wellenlänge von 650 nm zu erhalten, würde man als Sendeoptik eine Sammellinse mit einer Brennweite von 29 m benötigen, was den Einsatz an Textilmaschinen unmöglich macht. Der Strahlradius $w_S$ im Messvolumen berechnet sich dabei gemäß der nachfolgenden Gleichung, die ein Gaußsches Strahlprinzip voraussetzt. Darin bedeutet $w_L$ den Radius des unfokussierten Laserstrahls, n die Brechzahl und f die Brennweite der Fokussierlinse:

$$w_S = \frac{f \cdot \lambda}{\pi \cdot n \cdot w_L}$$

Aus der DE 196 48 713 A1 ist ein Verfahren zur optischen Bestimmung des Durchmessers von zylindrischen Körpern bekannt, das auf Basis eines planaren Phasen-Doppler-Anemometers ausgeführt wird. Um ein größeres Messvolumen im Schnittbereich der beiden Laserstrahlen zu erreichen, werden die beiden durch einen Strahlteiler erzeugten Laserstrahlen gegenüber dem ursprünglich aus dem Laser austretenden Laserstrahldurchmesser durch zwei Sammellinsen im Strahlengang der Laserstrahlen aufgeweitet. Obwohl durch eine derartige Aufweitung der Laserstrahldurchmesser das Messvolumen derartig aufgeweitet werden soll, dass Körperdurchmesser im Millimeterbereich messbar sind, ist auch hier eine Sammellinse erforderlich, um die beiden aufgeweiteten Laserteilstrahlen zum Schnitt zu bringen.

Das Vorhandensein dieser Sammellinse führt daher trotz der vorangegangenen Aufweitung der Strahlendurchmesser in nachteiliger Weise wiederum zu einer unerwünschten Verkleinerung des tatsächlich zur Verfügung stehenden Messvolumens. Abgesehen davon, dass in der DE 196 48 713 A1 lediglich eine berührungslose Bestimmung des Durchmessers, nicht jedoch eine Bestimmung der Geschwindigkeit eines zylindrischen Körpers mittels eines planaren Phasen-Doppler-Anemometers offenbart wird, weist dieses Verfahren bzw. eine entsprechende Vorrichtung ferner den Nachteil einer sehr aufwändigen Anordnung von mehreren optischen Elementen auf, um zunächst die Aufweitung der Laserstrahldurchmesser und anschließend eine erneute Fokussierung der Laserstrahlen zu erzielen. Insbesondere sind zur Erfassung des am Messobjekt gestreuten Lichtes zwei Detektoren erforderlich und für die Aufteilung des Laserstrahls muss ein rotierendes Gitter vorgesehen werden, an dem der Laserstrahl gebeugt wird, um die für die beiden Detektoren benötigten Laserstrahlen unterschiedlicher Frequenz zu erhalten. Diese Notwendigkeit von mechanisch bewegten Teilen stellt einen extremen Nachteil dar, da die Lebensdauer einer derartigen Anordnung relativ begrenzt ist und entsprechend oft Wartungsarbeiten erforderlich sind. Insgesamt führt dieser hohe Aufwand zu entsprechend hohen Kosten sowohl in der Herstellung als auch beim Betrieb einer derartigen Anordnung.

Aufgabe der vorliegenden Erfindung ist es daher, ein mit geringem Aufwand, leicht durchzuführendes Verfahren bzw. eine konstruktiv einfache Anordnung der eingangs genannten Art zu schaffen, mit dem bzw. mit der ein deutlich vergrößertes Messvolumen zur Verfügung gestellt wird und somit eine besonders zuverlässige Messung der Fadengeschwindigkeit möglich ist.

Diese Aufgabe wird erfindungsgemäß durch ein Verfahren nach Anspruch 1 sowie durch eine Vorrichtung bzw. Anordnung gemäß Anspruch 10 gelöst.

Vorteilhafte Ausgestaltungen und Weiterbildungen der Erfindung ergeben sich aus den jeweils abhängigen Ansprüchen.

Wesentlich bei der erfindungsgemäßen Lösung ist es zunächst, dass das LDA-Verfahren als Referenzstrahlverfahren ausgeführt wird, wobei der von der Lichtquelle erzeugte Laserstrahl durch die Teil- und Lenk-Einrichtung in einen Referenzstrahl und einen Streustrahl mit unterschiedlichen Intensitäten bzw. Helligkeiten geteilt wird, wobei die Intensität des Streustrahls mindestens doppelt so groß ist wie die Intensität des Referenzstrahls. Außerdem ist es bei der erfindungsgemäßen Lösung wesentlich, dass der von der Lichtquelle erzeugte Laserstrahl mittels einer Teil- und Lenk-Einrichtung derart geteilt und gelenkt wird, dass die beiden Teilstrahlen bereits beim Austritt aus dieser Teil-und Lenk-Einrichtung in einem Winkel aufeinander zu gerichtet verlaufen und sich unter Ausbildung des Messvolumens am Faden kreuzen.

Ein wesentlicher Vorteil besteht dabei darin, dass keine Sammellinse benötigt wird, um die beiden geteilten Laserstrahlen zur Erzeugung des Messvolumens miteinander zu schneiden. Auf diese Weise ergibt sich nicht nur ein konstruktiv besonders einfacher Aufbau, sondern es kann vor allem die bei der DE 103 42 383 A1 unvermeidbare Fokussierung und somit eine damit einhergehende Verkleinerung der Laserstrahldurchmesser vermieden werden. Die beiden Teilstrahlen können somit beim Austritt aus der Teil- und Lenk-Einrichtung vorteilhafterweise zumindest im wesentlichen unfokussiert auf den Faden gelenkt bzw. gerichtet werden. Das erfindungsgemäß eingesetzte Referenzstrahlverfahren bietet gleichzeitig den Vorteil, dass das empfangene Geschwindigkeitssignal wesentlich intensiver ist, so dass deutliche Einsparungen an analoger Verstärkertechnik realisiert werden können, was insbesondere bei der Serienapplikation an Textilmaschinen einen entscheidenden Vorteil bedeutet.

Ferner ist es bei der erfindungsgemäßen Lösung wesentlich, dass die Querdimension bzw. der Durchmesser des Referenzstrahls größer ist als die Querdimension bzw. der Durchmesser des laufenden Fadens, wobei der am Faden vorbeigehende Anteil des Referenzstrahls in die zur Ausführung des Laser-Doppler-Anemometrie-Verfahrens benötigte optische Sensoreinrichtung gelenkt wird. Auch hierdurch wird in vorteilhafter Weise ein vergrößertes Messvolumen erhalten.

Von Vorteil bei der erfindungsgemäßen Lösung ist es weiterhin, dass keine bewegten Elemente erforderlich sind und die Anordnung nur relativ wenig Platz benötigt, so dass sie leicht, insbesondere auch mehrfach an verschiedenen Spulstellen einer Textilmaschine vorgesehen werden kann. Insgesamt kann somit auf einfache und kostengünstige Weise ein besonders sichere und stabile Messung der Fadengeschwindigkeit durchgeführt werden.

Besonders vorteilhaft ist es dabei, wenn nicht nur der Referenzstrahl und der Streustrahl im wesentlichen fokussierungsfrei auf den Faden gelenkt werden, sondern auch der von der Lichtquelle erzeugte Laserstrahl durch die Teil- und Lenk-Einrichtung zumindest im wesentlichen fokussierungsfrei geteilt wird. So kann ohne deutliche Verkleinerung der Lichtstrahlen ein besonders großes Messvolumen erhalten werden.

Das Referenzstrahlverfahren kann besonders effektiv ausgeführt werden, wenn der von der Lichtquelle erzeugte Laserstrahl durch die Teil- und Lenk-Einrichtung derart geteilt wird, dass die Intensität des Streustrahls mindestens 80%, vorzugsweise 90% bis 95% der Intensität des Laserstrahls beträgt, und die Intensität des Referenzstrahls höchstens 10%, vorzugsweise 4% bis 5% der Intensität des Laserstrahls beträgt.

Besonders vorteilhaft ist es ferner, wenn die beiden Teilstrahlen beim Austritt aus der Teil- und Lenk-Einrichtung zwischen sich einen Winkel einschließen, der zwischen 0,5° und 30°, vorzugsweise zwischen 3° und 10° und insbesondere zwischen 4° und 5° liegt. Auf diese Weise können besonders großvolumige Kreuzungspunkte der beiden Teilstrahlen erzielt werden.

Gemäß einer ersten Ausführungsvariante der Erfindung kann die Lenkung und Teilung der Strahlen unter Verwendung von zwei Spiegelflächen erfolgen, von denen zumindest die zuerst vom Laserstrahl erreichte erste Spiegelfläche eine teildurchlässige Spiegelfläche ist, an welcher der von der Lichtquelle erzeugte Laserstrahl teilweise reflektiert wird und teilweise hindurchtritt. Zumindest ein Teil des hindurchgetretenen Teilstrahls tritt dabei nach Umlenkung an der zweiten, vollständig oder teilweise reflektierenden Spiegelfläche von der anderen Seite aus erneut durch die teildurchlässige erste Spiegelfläche hindurch.

Gemäß einer besonders bevorzugten Ausgestaltung der Erfindung kann der Laserstrahl mittels eines Keilprismas in zwei Teilstrahlen geteilt und ausgerichtet werden. Hierdurch kann das Verfahren auf sehr kleinem Raum und besonders stabil laufend ausgeführt werden. Die Vorderseite des Keilprismas kann dabei die erste Spiegelfläche der vorgenannten Ausführungsvariante bilden, während die Rückseite des Keilprismas die zweite Spiegelfläche der vorgenannten Ausführungsvariante bilden kann. Vorzugsweise wird vorgeschlagen, ein Keilprisma mit einer vollverspiegelten Rückseite zu verwenden, so dass keine Intensitätsverluste an der Rückseite auftreten können. Auch ist es insbesondere bei einem Keilprisma möglich, die Laserstrahlen mehrfach zwischen den beiden reflektierenden Flächen hin und her umzulenken. Besonders vorteilhaft ist es bei einem Keilprisma ferner, dass es einstückig aufgebaut ist und daher keine inneren Trennflächen oder Kontaktflächen einzelner Teilprismen aufweist, was zu einer nochmals vereinfachten und somit kostengünstigeren Bauweise führt.

Gemäß einer weiteren erfindungsgemäßen Ausführungsvariante kann die Strahlenteilung und -lenkung auch unter Verwendung von mindestens zwei Spiegelflächen durchgeführt werden, von denen zumindest die zuerst vom Laserstrahl erreichte erste Spiegelfläche eine teildurchlässige Spiegelfläche ist, an welcher der von der Lichtquelle erzeugte Laserstrahl teilweise reflektiert wird und teilweise hindurchtritt, wobei zumindest ein Teil des reflektierten und/oder des hindurchgetretenen Teilstrahls an der zweiten, zumindest teilweise reflektierenden Spiegelfläche derart umgelenkt wird, dass die beiden Teilstrahlen ohne Fokussierung am Messvolumen bzw. am Faden zusammentreffen. Bei dieser Variante ist es auch möglich, dass die beiden Teilstrahlen nach dem Passieren der ersten Spiegelfläche zunächst parallel zueinander oder in einem Winkel voneinander weg gerichtet verlaufen, wobei jedoch anschließend zumindest ein Teilstrahl ausschließlich durch Reflektion derart umgelenkt wird, dass die beiden Teilstrahlen sich ohne Fokussierung unter Ausbildung des Messvolumens am Faden kreuzen.

Vorteilhafterweise kann der am Faden vorbeigehende Anteil des Referenzstrahls ohne weitere Umlenkung direkt in die zur Ausführung des Laser-Doppler-Anemometrie-Verfahrens vorgesehene optische Sensoreinrichtung geführt werden, was eine besonders einfache Ausführungsform erlaubt.

Besonders vorteilhaft ist es ferner, das bei dem erfindungsgemäßen Referenzstrahlverfahren aufgrund der hohen Intensität des Streustrahls die Möglichkeit besteht, die von nur einer einzigen optischen Sensoreinrichtung erfassten Anteile des Referenzstrahls sowohl für die Bestimmung der Geschwindigkeit des Fadens als auch für die Bestimmung des Durchmessers des Fadens zu verwenden. Bei den bisher bekannten Verfahren waren hierfür zwei verschiedene Sensoren notwendig, was mit einem höheren Aufwand und entsprechend höheren Kosten verbunden war. Der Streustrahl wird hierfür nicht benötigt.

Eine dem vorangehend beschriebenen Verfahren entsprechende Anordnung zum berührungslosen Bestimmen der Struktur und/oder der Geschwindigkeit eines laufenden Fadens im Fadenlauf einer Textilmaschine umfasst eine Lichtquelle zur Erzeugung eines Laserstrahls, eine optische Teil- und Lenk-Einrichtung, durch die der Laserstrahl in mindestens zwei am Faden zusammenführbare Teilstrahlen aufgeteilt und entsprechend gelenkt werden kann, sowie eine optische Sensoreinrichtung, mittels der aus dem vom Faden beeinflussten bzw. reflektierten Licht nach dem Laser-Doppler-Anemometrie-Verfahren Messsignale erzeugt werden können, die zur Bestimmung der Struktur und/oder der Geschwindigkeit des laufenden Fadens einer Auswerteeinheit zugeführt werden.

Wesentlich bei der erfindungsgemäßen Anordnung ist es, dass zur Ausführung des Laser-Doppler-Anemometrie-Verfahrens als Referenzstrahlverfahren die optische Teil- und Lenk-Einrichtung derart ausgebildet ist, dass der von der Lichtquelle erzeugte Laserstrahl in einen Referenzstrahl und einen Streustrahl mit unterschiedlichen Intensitäten bzw. Helligkeiten aufteilbar ist, wobei die Intensität des Streustrahls mindestens doppelt so groß ist wie die Intensität des Referenzstrahls. Weiterhin ist es wesentlich, dass die optische Teil- und Lenk-Einrichtung derart ausgebildet ist, dass der Austritt des Referenzstrahls und des Streustrahls aus dieser Teil- und Lenk-Einrichtung so in einem Winkel aufeinander zu gerichtet erfolgt, dass sie sich am Faden kreuzen. Außerdem ist es bei der erfindungsgemäßen Anordnung wesentlich, dass die Querdimension des Referenzstrahls größer ist als die Querdimension des laufenden Fadens, wobei der am Faden vorbeigehende Anteil des Referenzstrahls in die optische Sensoreinrichtung gelenkt wird.

So sind die beiden Teilstrahlen bei der erfindungsgemäßen Anordnung in vorteilhafter Weise ohne Sammellinse fokussierungsfrei auf den Faden lenkbar. Selbstverständlich kann jedoch die optische Sensoreinrichtung zur Erfassung der vom Faden gestreuten Lichtsignale eine Empfangsoptik, insbesondere eine Blende und/oder eine Sammellinse umfassen. Auch in dem vor der Teil- und Lenk-Einrichtung liegenden Strahlenverlauf kann eine Kollimieroptik mit Sammellinsen liegen, um den Ausgangsstrahl in der gewünschten Abmessung und Intensität zu erzeugen.

Im übrigen ist eine erfindungsgemäße Anordnung vorteilhafterweise derart ausgestaltet, dass sie zur Ausführung des vorangehend beschriebenen erfindungsgemäßen Verfahrens geeignet ist, und die dazu beschriebenen Vorteile erzielt.

Gemäß einer besonders bevorzugten Ausführungsform der Anordnung ist vorgesehen, dass die optische Teil- und Lenk-Einrichtung derart ausgebildet ist, dass der von der Lichtquelle erzeugte Laserstrahl zumindest im wesentlichen fokussierungsfrei aufgeteilt wird und der Referenzstrahl und der Streustrahl zumindest im wesentlichen fokussierungsfrei auf den Faden gelenkt bzw. gerichtet werden. Auf diese Weise wird ohne wesentliche Verkleinerung der Lichtstrahlen ein besonders großes Messvolumen erhalten.

Weiterhin ist die optische Teil- und Lenk-Einrichtung vorteilhafterweise derart ausgebildet, dass der von der Lichtquelle erzeugte Laserstrahl so aufteilbar ist, dass die Intensität des Streustrahls mindestens 80%, vorzugsweise 90% bis 95% der Intensität des Laserstrahls beträgt, und die Intensität des Referenzstrahls höchstens 10%, vorzugsweise 4% bis 5% der Intensität des Laserstrahls beträgt. Auf diese Weise wird das empfangbare Geschwindigkeitssignal besonders intensiv, so dass eine einfache und kostengünstige analoge Verstärkertechnik eingesetzt werden kann.

Ferner ist die Teil- und Lenk-Einrichtung vorzugsweise derart ausgebildet, dass sich zwischen dem Referenzstrahl und dem Streustrahl beim Austritt aus der Teil- und Lenk-Einrichtung ein Winkel erstreckt, der zwischen 0,5° und 30°, vorzugsweise zwischen 3° und 10° und insbesondere zwischen 4° und 5° liegt, um ein besonders großes Messvolumen an dem Kreuzungspunkt der beiden Teilstrahlen zu erzielen.

Bei einer besonders bevorzugten Ausführungsform der erfindungsgemäßen Anordnung ist die optische Teil- und Lenk-Einrichtung durch ein Keilprisma gebildet, was einen besonders kompakten Aufbau und eine einfache Montage ermöglicht. Die Rückseite des Keilprismas ist um einen relativ kleinen Winkel gegenüber der Vorderseite, auf die der Laserstrahl zuerst auftrifft geneigt, so dass sich insgesamt eine Keilform ergibt. Dabei wirkt die Vorderseite als teildurchlässige Reflektionsfläche, an der der von der Lichtquelle erzeugte Laserstrahl teilweise reflektiert wird und teilweise hindurchtritt, während die Rückseite zumindest einen Teil des durch die Vorderseite hindurchgetretenen Teilstrahls reflektiert. Dieser reflektierte Teil tritt anschließend von innen durch die teildurchlässige Vorderseite hindurch wieder aus dem Keilprisma aus, wobei die dabei auftretende Strahl-Beugung den gewünschten Winkel zwischen den beiden für die Ausführung des LDA-Verfahrens benötigten Teilstrahlen herbeiführt. Ferner ist es bei einem Keilprisma von Vorteil, dass es bei einstückiger Bauweise keine inneren Trennflächen oder Kontaktflächen einzelner Teilprismen aufweist, was zu einer besonders einfachen und somit kostengünstigen Bauweise führt.

Besonders vorteilhaft ist es dabei, wenn die Rückseite des Keilprismas vollverspiegelt ist. Dadurch wird der in das Keilprisma eingetretene Teilstrahl verlustfrei vollständig an der Rückseite reflektiert, so dass bei der erfindungsgemäßen Anwendung des Referenzstrahlverfahrens als Streustrahl ein Teilstrahl mit einer Intensität von ca. 90% der Intensität des von der Lichtquelle ursprünglich erzeugten Laserstrahls erzielt werden kann.

Insbesondere bei Einsatz eines Keilprismas mit einer vollverspiegelten Rückseite kann der in das Keilprisma eingetretene Laserstrahl auch mehrfach zwischen der Vorderseite und der Rückseite in dem Keilprisma hin und her reflektiert werden, wobei die an der teildurchlässigen Vorderseite austretenden Strahlen die beiden für das Referenzstrahlverfahren benötigten Teilstrahlen bilden.

Für eine Ausführungsvariante der erfindungsgemäßen Anordnung wird vorgeschlagen, dass die Teil- und Lenk-Einrichtung mindestens zwei Spiegelflächen umfasst, von denen zumindest die zuerst vom Laserstrahl erreichte erste Spiegelfläche eine teildurchlässige Spiegelfläche ist, durch die der Laserstrahl teilweise reflektierbar und teilweise hindurchführbar ist, wobei zumindest ein Teil des reflektierten oder des hindurchgetretenen Teilstrahls an der zweiten, zumindest teilweise reflektierenden Spiegelfläche derart umlenkbar ist, dass die beiden Teilstrahlen am Messvolumen bzw. am Faden zusammentreffen. Zusätzlich können auch weitere Umlenkungen der Teilstrahlen vorgenommen werden, solange sie fokussierungsfrei sind und nicht zu einer Verengung der Teilstrahlen führen. Hierbei ist auch eine Anordnung möglich, bei der die beiden Teilstrahlen nach dem Passieren der ersten Spiegelfläche zunächst parallel zueinander oder in einem Winkel voneinander weg gerichtet erfolgt, wobei jedoch zusätzlich nicht fokussierende Reflektionsmittel derart angeordnet sind, dass die beiden Teilstrahlen sich unter Ausbildung des Messvolumens am Faden kreuzen. Die erste Spiegelfläche bildet dabei zusammen mit den weiteren nicht fokussierenden Reflektionsmitteln die Teil- und Lenk-Einrichtung.

Vorteilhafterweise kann der am Faden vorbeigehende Anteil des Referenzstrahls ohne weitere Umlenkung direkt in die optische Sensoreinrichtung geführt werden, was eine besonders einfache Ausführungsform ermöglicht.

Besonders vorteilhaft ist es ferner, wenn der vom laufenden Faden beeinflusste und/oder der am Faden vorbeigehende Anteil des Referenzstrahls von nur einer einzigen optischen Sensoreinrichtung derart erfasst wird, dass durch die hiervon erzeugten Messsignale sowohl zur Bestimmung der Geschwindigkeit als auch zur Bestimmung des Durchmessers des Fadens ausgewertet werden.

Als Lichtquelle eignet sich insbesondere ein Diodenlasermodul, wobei vorzugsweise ein VCSEL-Laser oder ein Kantenemitter eingesetzt werden kann.

Weitere Vorteile und Merkmale der Erfindung ergeben sich aus der nachfolgenden Beschreibung und den in den Zeichnungen dargestellten Ausführungsbeispielen.

Es zeigen:

Figur 1: schematische Darstellung einer Anordnung zur Durchführung des erfindungsgemäßen Verfahrens; und

Figur 2: schematische Darstellung einer alternativen Anordnung zur Durchführung des erfindungsgemäßen Verfahrens.

Bei dem in den Figuren dargestellten Verfahren wird als Lichtquelle ein Diodenlaser 1 in Verbindung mit einer Kollimieroptik 2 eingesetzt. Der hiervon erzeugte Laserstrahl 3 wird mit konstantem Strahldurchmesser auf ein als Teil-und Lenk-Einrichtung eingesetztes Keilprisma 4 gelenkt. Durch das einstückige Keilprisma 4 wird der Laserstrahl 3 in der nachfolgend beschriebenen Art und Weise in zwei Teilstrahlen 5a und 5b aufgeteilt, die auf einen an einer Fadenlaufstelle 6 einer nicht näher dargestellten Textilmaschine in Richtung des Pfeils 7 laufenden Faden 8 gerichtet sind. Hier liegt die Fadenlaufstelle 6 in einer Spulstelle einer Textilmaschine. In einem dem Keilprisma 4 gegenüberliegenden Bereich des textilen Garns bzw. Fadens 8 befindet sich als optische Sensoreinrichtung ein Fotodetektor 9 und eine Empfangsoptik.die insbesondere Sammellinsen 10 und/oder Blenden 11 umfassen kann.

Das durch einen schief abgeschnittenen Glasquader gebildete Keilprisma 4 hat eine teildurchlässige Vorderseite 12 und eine in einem Winkel δ schräg hierzu verlaufende Rückseite 13, die bei dem in den Figuren dargestellten Verfahren vollständig verspiegelt ausgeführt ist. Durch Reflektion und Brechung verlassen die beiden Teilstrahlen 5a und 5b die Vorderseite 12 des Keilprismas 4 unter einem Winkel schräg aufeinander zu gerichtet, so dass sie sich im Bereich der Fadenlaufstelle 6 am Faden 8 kreuzen. Eine Fokussierung der Teilstrahlen 5a und 5b, beispielsweise durch eine Sammellinse erfolgt dabei nicht, so dass im Bereich der Kreuzung der beiden Teilstrahlen 5a und 5b ein sehr großes Messvolumen mit einem Durchmesser von ca. 2 bis 3 mm bei einem Durchmesser von ca. 3 mm des ursprünglichen Laserstrahls 3 erhalten wird. Durch ein derartig großes Messvolumen kann der laufende Faden 8 problemlos hindurchgeführt werden, so dass seine Struktur im Rahmen einer Qualitäts-überwachung des gespulten Garns auch bei während des Spulprozesses hervorgerufenen Unregelmäßigkeiten zuverlässig erfasst werden kann.

Das Laserlicht der beiden Teilstrahlen 5a und 5b trifft an der Fadenlaufstelle 6 auf die Oberfläche des laufenden Fadens 8 und wird von ihr gestreut. Aufgrund der Bewegung des Fadens 8 findet eine Relativbewegung zwischen dem ortsfesten Diodenlaser 1 als Sender der Lichtwellen und dem Faden 8 als dem Empfänger statt. In Abhängigkeit von der Relativgeschwindigkeit tritt dabei eine Veränderung der vom Faden 8 reflektierten Lichtwellen auf, die als Dopplereffekt bekannt ist. Durch Überlagerung der beiden Doppler-Frequenzen ergibt sich im Rahmen der an sich bekannten LDA-Technik eine Schwebung, die ein aus hellen und dunklen Bereichen bestehendes Interferenzmuster ausbildet, welches von dem Fotodetektor 9 erfasst wird. Zu weiteren Einzelheiten wird diesbezüglich auf die DE 103 42 383 A1 verwiesen.

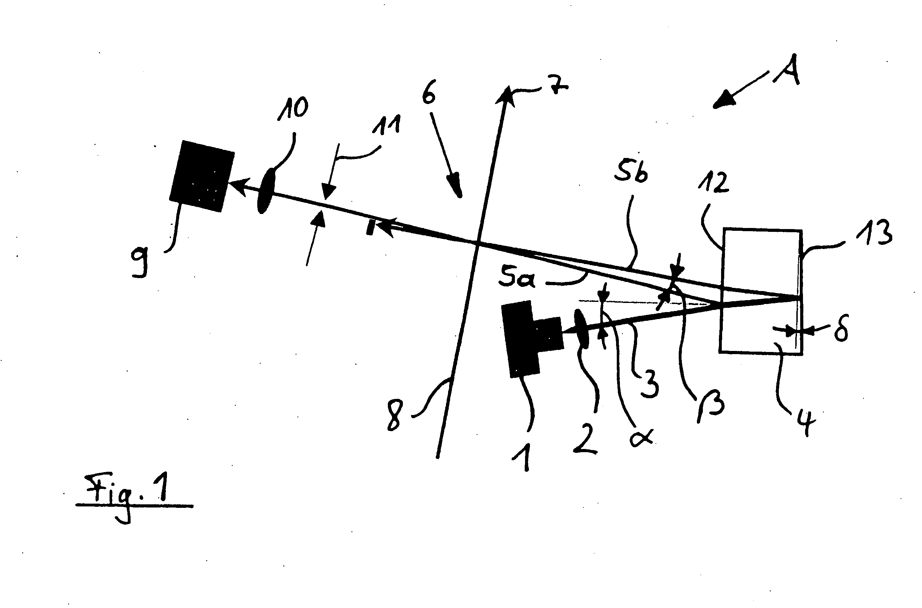

Bei dem in Figur 1 dargestellten Referenzstrahlverfahren trifft der Laserstrahl 3 unter einem Winkel α schräg auf die teildurchlässige Vorderseite 12 des Keilprismas 4 auf. Ein erster Teilstrahl 5a wird direkt an der Vorderseite 12 reflektiert. Dieser Teilstrahl 5a hat eine Intensität von ca. 5% der Intensität des ursprünglichen Laserstrahls 3. Der nichtreflektierte Anteil des Laserstrahls 3 tritt durch die Vorderseite 12 hindurch in das Keilprisma 4 ein und wird an der vollverspiegelten Rückseite 13 vollständig reflektiert. Nach anschließender Brechung an der Vorderseite 12 tritt er als zweiter Teilstrahl 5b mit einer Intensität von ca. 90% der Intensität des ursprünglichen Laserstrahls 3 wieder aus dem Keilprisma 4 aus.

Der genaue Strahlenverlauf der beiden Teilstrahlen 5a und 5b berechnet sich gemäß dem Snelliusschen Gesetz:

$$\frac{n_1}{n_2} = \frac{\sin\alpha_2}{\sin\alpha_1}$$

In dem dargestellten Ausführungsbeispiel ergibt sich danach ein Winkel β von ca. 4,5° zwischen den beiden Teilstrahlen 5a und 5b.

Der erste Teilstrahl 5a bildet hier den Referenzstrahl, der nach Passieren einer aus einer Blende 11 und einer Sammellinse 10 gebildeten Empfangsoptik von dem Fotodetektor 9 erfasst wird. Der zweite Teilstrahl 5b bildet den Streustrahl, der zur Erzeugung des Interferenzmusters bzw. der Schwebungsfrequenz erforderlich ist. Nach dem Passieren des laufenden Fadens 8 wird der Streustrahl 5b für die eigentliche Auswertung nicht weiter benötigt, so dass er durch die Blende 11 von dem Fotodetektor 9 abgeschirmt werden kann.

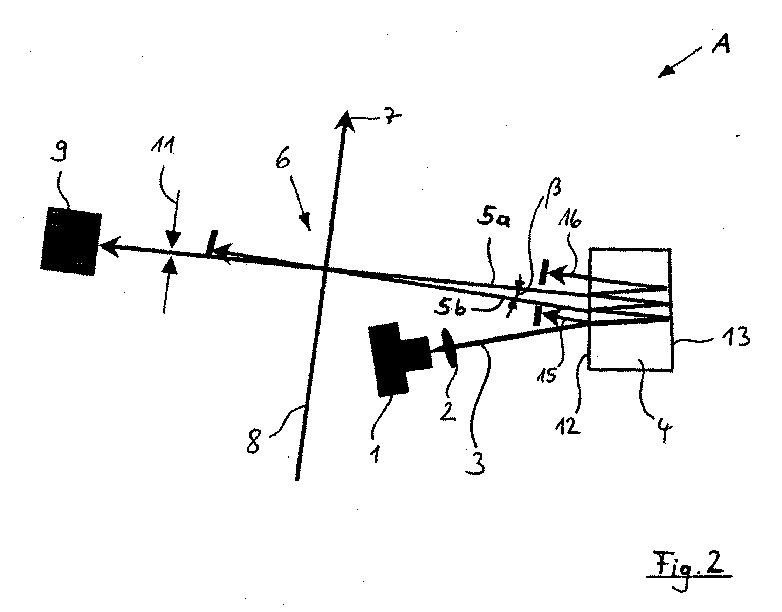

Bei der in Figur 2 dargestellten Variante des Referenzstrahlverfahrens erfolgt die Strahlteilung unter mehrfacher Reflektion und Brechung an dem Keilprisma 4. Ein erster Anteil 15 mit einer Intensität von ca. 5% der Intensität des ursprünglichen Laserstrahls 3 wird an der teildurchlässigen Vorderseite 12 reflektiert und zur Ausführung des weiteren Verfahrens nicht mehr benötigt. Der in das Keilprisma 4 eingetretene Restanteil des Laserstrahls 3 wird an der verspiegelten Rückseite 13 vollständig reflektiert und trifft danach von innen auf die teildurchlässige Vorderseite 12 auf, wo der größte Anteil als erster Teilstrahl 5b mit einer Intensität von ca. 90% aus dem Keilprisma 4 austritt. Der nicht ausgetretene Anteil wird zunächst an der Vorderseite 12 und anschließend erneut an der Rückseite 13 reflektiert, so dass er zum zweitenmal von innen auf die Vorderseite 12 auftrifft und als zweiter Teilstrahl 5a mit einer Intensität von ca. 4% das Keilprisma 4 verlässt. Der verbleibende Restanteil wird erneut an der Vorderseite 12 sowie anschließend ein weiteres Mal an der Rückseite 13 reflektiert, bevor er mit einer vernachlässigbaren Intensität von weniger als 1 % der Intensität des ursprünglichen Laserstrahls 3 als Reststrahl 16 aus dem Keilprisma 4 austritt und zur Durchführung des Referenzstrahlverfahrens nicht weiter benötigt wird. Hier bildet der erste Teilstrahl 5b mit einer Intensität von ca. 90% den Streustrahl, während der zweite Teilstrahl 5a mit einer Intensität von ca. 4% den auf den Fotodetektor 9 gerichteten Referenzstrahl bildet. Auch hier wird der Streustrahl 5b nach dem Passieren des laufenden Fadens 8 für die eigentliche Auswertung nicht weiter benötigt, so dass er wiederum durch die Blende 11 von dem Fotodetektor 9 abgeschirmt werden kann.

Bei den in den beiden Figuren dargestellten Anordnungen A teilt das Keilprisma 4 den Laserstrahl 3 jeweils in zwei phasengleiche Teilstrahlen 5a und 5b auf, die anschließend so zur Überlagerung gebracht werden, dass sie sich im Bereich der Fadenlaufstelle 6 an dem laufenden Faden 8 kreuzen.

Selbstverständlich ist die Erfindung nicht auf die in den Figuren dargestellten Ausführungsbeispiele beschränkt. Insbesondere muss als Teil- und Lenk-Einrichtung nicht unbedingt ein Keilprisma 4 eingesetzt werden, sondern es können auch entsprechend angeordnete fokussierungsfreie Spiegelgeometrien mit teildurchlässigem Eingangsspiegel verwendet werden.

**Patentansprüche**

1. Verfahren zum berührungslosen Bestimmen der Struktur und/oder der Geschwindigkeit eines laufenden Fadens (8) im Fadenlauf (6) einer Textilmaschine mittels einer Sensoreinrichtung, wobei von einer Lichtquelle (1, 2) ein Laserstrahl (3) erzeugt und dieser mittels einer optischen Teil- und Lenk-Einrichtung (4) zur Teilung und Lenkung des Laserstrahls (3) in mindestens zwei am Faden (8) wieder zusammentreffende Teilstrahlen (5a, 5b) geteilt wird, wobei aus dem vom Faden (8) beeinflussten und/oder reflektierten Licht nach dem Laser-Doppler-Anemometrie-Verfahren Messsignale erzeugt werden, die zur Bestimmung der Struktur und/oder der Geschwindigkeit des laufenden Fadens (8) elektronisch ausgewertet werden,
**dadurch gekennzeichnet,**
**dass** das Laser-Doppler-Anemometrie-Verfahren als Referenzstrahlverfahren ausgeführt wird, wobei der von der Lichtquelle (1, 2) erzeugte Laserstrahl (3) durch die Teil- und Lenk-Einrichtung (4) in einen Referenzstrahl (5a) und einen Streustrahl (5b) mit unterschiedlichen Intensitäten geteilt wird, wobei die Intensität des Streustrahls (5b) mindestens doppelt so groß ist wie die Intensität des Referenzstrahls (5a),

**dass** der von der Lichtquelle (1, 2) erzeugte Laserstrahl (3) durch die Teil-und Lenk-Einrichtung (4) derart geteilt und gelenkt wird, dass der Referenzstrahl (5a) und der Streustrahl (5b) bereits beim Austritt aus der Teil- und Lenk-Einrichtung (4) so in einem Winkel (β) aufeinander zu gerichtet verlaufen, dass sie sich am Faden (8) kreuzen,

und **dass** die Querdimension des Referenzstrahls (5a) größer ist als die Querdimension des laufenden Fadens (8), wobei der am Faden (8) vorbeigehende Anteil des Referenzstrahls (5a) in die zur Ausführung des Laser-Doppler-Anemometrie-Verfahrens vorgesehene optische Sensoreinrichtung (9, 10, 11) gelenkt wird.

2. Verfahren nach Anspruch 1, **dadurch gekennzeichnet, dass** der von der Lichtquelle (1, 2) erzeugte Laserstrahl (3) durch die Teil-und Lenk-Einrichtung (4) fokussierungsfrei geteilt wird und der Referenzstrahl (5a) und der Streustrahl (5b) fokussierungsfrei auf den Faden (8) gelenkt werden.

3. Verfahren nach Anspruch 1 oder 2, **dadurch gekennzeichnet, dass** der von der Lichtquelle (1, 2) erzeugte Laserstrahl (3) durch die Teil- und Lenk-Einrichtung (4) derart geteilt wird, dass die Intensität des Streustrahls (5b) mindestens 80%, vorzugsweise 90% bis 95% der Intensität des Laserstrahls (3) beträgt, und dass die Intensität des Referenzstrahls (5a) höchstens 10%, vorzugsweise 4% bis 5% der Intensität des Laserstrahls (3) beträgt.

4. Verfahren nach einem der Ansprüche 1 bis 3, **dadurch gekennzeichnet, dass** der Referenzstrahl (5a) und der Streustrahl (5b) beim Austritt aus der Teil- und Lenk-Einrichtung (4) zwischen sich einen Winkel (β) einschließen, der zwischen 0,5° und 30°, vorzugsweise zwischen 3° und 10° und insbesondere zwischen 4° und 5° liegt.

5. Verfahren nach einem der vorherigen Ansprüche, **dadurch gekennzeichnet, dass** die Strahlenteilung (4) unter Verwendung von zwei Spiegelflächen erfolgt, von denen zumindest die zuerst vom Laserstrahl (3) erreichte erste Spiegelfläche eine teildurchlässige Spiegelfläche ist, an welcher der Laserstrahl (3) teilweise reflektiert wird und teilweise hindurchtritt, wobei zumindest ein Teil des hindurchgetretenen Teilstrahls nach Umlenkung an der zweiten, zumindest teilweise reflektierenden Spiegelfläche von der anderen Seite aus erneut durch die teildurchlässige erste Spiegelfläche hindurchtritt.

6. Verfahren nach einem der vorherigen Ansprüche, **dadurch gekennzeichnet, dass** der Laserstrahl (3) mittels eines einstückigen Keilprismas (4) geteilt und ausgerichtet wird.

7. Verfahren nach einem der Ansprüche 1 bis 4, **dadurch gekennzeichnet, dass** die Strahlenteilung unter Verwendung von mindestens zwei Spiegelflächen erfolgt, von denen zumindest die zuerst vom Laserstrahl (3) erreichte erste Spiegelfläche eine teildurchlässige Spiegelfläche ist, an welcher der Laserstrahl (3) teilweise reflektiert wird und teilweise hindurchtritt, wobei zumindest ein Teil des reflektierten oder des hindurchgetretenen Teilstrahls an der zweiten, zumindest teilweise reflektierenden Spiegelfläche derart umgelenkt wird, dass die beiden Teilstrahlen (5a, 5b) an dem Faden (8) zusammentreffen.

8. Verfahren nach einem der vorherigen Ansprüche, **dadurch gekennzeichnet, dass** der am Faden (8) vorbeigehende Anteil des Referenzstrahls (5a) ohne weitere Umlenkung direkt in die zur Ausführung des Laser-Doppler-Anemometrie-Verfahrens vorgesehene optische Sensoreinrichtung (9, 10, 11) geführt wird.

9. Verfahren nach einem der vorherigen Ansprüche, **dadurch gekennzeichnet, dass** die von einer einzigen optischen Sensoreinrichtung (9, 10, 11) erfassten Anteile des Referenzstrahls (5a) sowohl für die Bestimmung der Geschwindigkeit als auch für die Bestimmung des Durchmessers des Fadens (8) verwendet werden.

10. Anordnung (A) zum berührungslosen Bestimmen der Struktur und/oder der Geschwindigkeit eines laufenden Fadens (8) im Fadenlauf (6) einer Textilmaschine, umfassend eine Lichtquelle (1, 2) zur Erzeugung eines Laserstrahls (3), eine optische Teil- und Lenk-Einrichtung (4), durch die der Laserstrahl (3) in mindestens zwei am Faden (8) zusammenführbare Teilstrahlen (5a, 5b) aufteilbar ist, sowie eine optische Sensoreinrichtung (9, 10, 11), mittels der aus dem vom Faden (8) beeinflussten und/oder reflektierten Licht nach dem Laser-Doppler-Anemometrie-Verfahren Messsignale erzeugbar sind, die zur Bestimmung der Struktur und/oder der Geschwindigkeit des laufenden Fadens (8) einer Auswerteeinheit zuführbar sind,

**dadurch gekennzeichnet,**

**dass** zur Ausführung des Laser-Doppler-Anemometrie-Verfahrens als Referenzstrahlverfahren die optische Teil- und Lenk-Einrichtung (4) derart ausgebildet ist, dass der von der Lichtquelle (1, 2) erzeugte Laserstrahl (3) in einen Referenzstrahl (5a) und einen Streustrahl (5b) mit unterschiedlichen Intensitäten aufteilbar ist, wobei die Intensität des Streustrahls (5b) mindestens doppelt so groß ist wie die Intensität des Referenzstrahls (5a), dass die optische Teil- und Lenk-Einrichtung (4) derart ausgebildet ist, dass der Austritt des Referenzstrahls (5a) und des Streustrahls (5b) aus der Teil-und Lenk-Einrichtung (4) so in einem Winkel (β) aufeinander zu gerichtet erfolgt, dass sie sich am Faden (8) kreuzen, und **dass** die Querdimension des Referenzstrahls (5a) größer ist als die Querdimension des laufenden Fadens (8), wobei der am Faden (8) vorbeigehende Anteil des Referenzstrahls (5a) in die optische Sensoreinrichtung (9, 10, 11) gelenkt ist.

11. Anordnung nach Anspruch 10, **dadurch gekennzeichnet, dass** die optische Teil- und Lenk-Einrichtung (4) derart ausgebildet ist, dass der von der Lichtquelle (1, 2) erzeugte Laserstrahl (3) fokussierungsfrei aufteilbar ist und der Referenzstrahl (5a) und der Streustrahl (5b) fokussierungsfrei auf den Faden (8) lenkbar sind.

12. Anordnung nach Anspruch 10 oder 11, **dadurch gekennzeichnet, dass** die optische Teil- und Lenk-Einrichtung (4) derart ausgebildet ist, dass der von der Lichtquelle (1, 2) erzeugte Laserstrahl (3) so aufteilbar ist, dass die Intensität des Streustrahls (5b) mindestens 80%, vorzugsweise 90% bis 95% der Intensität des Laserstrahls (3) beträgt, und dass die Intensität des Referenzstrahls (5a) höchstens 10%, vorzugsweise 4% bis 5% der Intensität des Laserstrahls (3) beträgt.

13. Anordnung nach einem der Ansprüche 10 bis 12, **dadurch gekennzeichnet, dass** zwischen dem Referenzstrahl (5a) und dem Streustrahl (5b) beim Austritt aus der Teil- und Lenk-Einrichtung (4) ein Winkel (β) sich erstreckt, der zwischen 0,5° und 30°, vorzugsweise zwischen 3° und 10° und insbesondere zwischen 4° und 5° liegt.

14. Anordnung nach einem der Ansprüche 10 bis 13, **dadurch gekennzeichnet, dass** die Teil- und Lenk-Einrichtung (4) zwei Spiegelflächen umfasst, von denen zumindest die zuerst vom Laserstrahl (3) erreichte erste Spiegelfläche eine teildurchlässige Spiegelfläche ist, an welcher der Laserstrahl (3) teilweise reflektierbar und teilweise hindurchführbar ist, wobei an der zweiten, zumindest teilweise reflektierenden Spiegelfläche zumindest ein Teil des durch die erste Fläche hindurchgeführten Teilstrahls derart umlenkbar ist, dass er von der anderen Seite aus durch die teildurchlässige erste Spiegelfläche hindurchführbar ist.

15. Anordnung nach einem der Ansprüche 10 bis 14, **dadurch gekennzeichnet, dass** die optische Teil- und Lenk-Einrichtung durch ein einstückiges Keilprisma (4) gebildet ist.

16. Anordnung nach Anspruch 15, **dadurch gekennzeichnet, dass** die Rückseite (13) des Keilprismas (4) verspiegelt ist.

17. Anordnung nach einem der Ansprüche 10 bis 13, **dadurch gekennzeichnet, dass** die Teil- und Lenk-Einrichtung (4) zwei Spiegelflächen umfasst, von denen zumindest die zuerst vom Laserstrahl (3) erreichte erste Spiegelfläche eine teildurchlässige Spiegelfläche ist, durch die der Laserstrahl (3) teilweise reflektierbar und teilweise hindurchführbar ist, wobei zumindest ein Teil des reflektierten oder des hindurchgetretenen Teilstrahls an der zweiten, zumindest teilweise reflektierenden Spiegelfläche derart umlenkbar ist, dass die beiden Teilstrahlen (5a, 5b) an dem Faden (8) zusammentreffen.

18. Anordnung nach einem der Ansprüche 10 bis 17, **dadurch gekennzeichnet, dass** der am Faden (8) vorbeigehende Anteil des Referenzstrahls (5a) ohne weitere Umlenkung direkt in die optische Sensoreinrichtung (9, 10, 11) geführt ist.

19. Anordnung nach einem der Ansprüche 10 bis 18, **dadurch gekennzeichnet, dass** der Referenzstrahl (5a) von einer einzigen optischen Sensoreinrichtung (9, 10, 11) erfassbar ist, durch die Messsignale erzeugbar sind, welche sowohl zur Bestimmung der Geschwindigkeit als auch zur Bestimmung des Durchmessers des Fadens (8) auswertbar sind.

20. Anordnung nach einem der Ansprüche 10 bis 19, **dadurch gekennzeichnet, dass** die Lichtquelle durch ein Diodenlasermodul (1), insbesondere durch einen VCSEL-Laser oder einen Kantenemitter, gebildet ist.

**Claims**

1. Method for contactlessly determining the structure and/or speed of a thread (8) running in the thread run (6) of a textile machine using a sensor device, wherein a laser beam (3) is produced by a light source (1, 2) and is divided into at least two sub-beams (5a, 5b), which meet again at the thread (8), using an optical device (4) for dividing and guiding the laser beam (3), whereby the light influenced and/or reflected by the thread (8) creates measurement signals according to the laser Doppler anemometry method, which are electronically evaluated for determining the structure and/or speed of the running thread (8), **characterised by the fact that** the laser Doppler anemometry method is used as the reference beam method, whereby the laser beam (3) created by the light source (1, 2) is split by the dividing and guiding device (4) into a reference beam (5a) and a scattering beam (5b) with different intensities, whereby the intensity of the scattering beam (5b) is at least twice as great as the intensity of the reference beam (5a),

the laser beam (3) created by the light source (1, 2) is divided and guided by the dividing and guiding device (4) in such a way that the reference beam (5a) and the scattering beam (5b) are already orientated toward each other at an angle (β) when they exit the dividing and guiding device (4), with the result that they intersect on the thread (8),

and that the transverse dimension of the reference beam (5a) is greater than the transverse dimension of the running thread (8), whereby the portion of the reference beam (5a) which passes the thread (8) is guided into the optical sensor device (9, 10, 11) which is provided for carrying out the laser Doppler anemometry method.

2. Method according to Claim 1, **characterised by the fact that** the laser beam (3) created by the light source (1, 2) is divided by the dividing and guiding device (4) without being focused and the reference beam (5a) and the scattering beam (5b) are guided onto the thread (8) without being focused.

3. Method according to Claim 1 or 2, **characterised by the fact that** the laser beam (3) created by the light source (1 ,2) is divided by the dividing and guiding device (4) in such a way that the intensity of the scattering beam (5b) is at least 80%, preferably 90% to 95% of the intensity of the laser beam (3), and that the intensity of the reference beam (5a) is at most 10%, preferably 4% to 5% of the intensity of the laser beam (3).

4. Method according to Claims 1 to 3, **characterised by the fact that** the reference beam (5a) and the scattering beam (5b), when exiting the dividing and guiding device (4) form an angle (β) between each other that lies between 0.5° and 30°, preferably between 3° and 10° and particularly between 4° and 5°.

5. Method according to one of the previous claims, **characterised by the fact that** the beam splitting (4) occurs using two mirror surfaces, of which at least the one first reached by the laser beam (3) is a partially transmissible mirror surface on which the laser beam (3) is partially reflected and partially passes through, whereby at least one part of the penetrating sub-beam at least partially passes again through the partially transmissible first mirror surface from the other side after redirection at the second at least partially reflective mirror surface.

6. Method according to one of the previous claims, **characterised by the fact that** the laser beam (3) is split and directed by means of a single-piece wedge prism (4).

7. Method according to Claims 1 to 4, **characterised by the fact that** the beam splitting occurs using at least two mirror surfaces, of which at least the one first reached by the laser beam (3) is a partially transmissible mirror surface, on which the laser beam (3) is partially reflected and partially passes through, whereby at least a part of the reflected or penetrating sub-beam is redirected at the second at least partially reflective mirror surface in such a way that the two sub-beams (5a, 5b) meet on the thread (8).

8. Method according to one of the previous claims, **characterised by the fact that** the portion of the reference beam (5a) which passes the thread (8) is guided without further redirection directly into the optical sensor device (9, 10, 11) which is provided for carrying out the laser Doppler anemometry method.

9. Method according to the previous claims, **characterised by the fact that** the portions of the reference beam (5a) recorded by a single optical sensor device (9, 10, 11) are used for determining both the speed and the diameter of the thread (8).

10. Arrangement (A) for contactlessly determining the structure and/or speed of a thread (8) running in the thread run (6) of a textile machine, including a light source (1, 2) for creating a laser beam (3), an optical dividing and guiding device (4), through which the laser beam (3) is divisible into at least two sub-beams (5a, 5b) that can be rejoined on the thread (8), as well as an optical sensor device (9, 10, 11) from which, by means of the light influenced and/or reflected by the thread (8) according to the laser Doppler anemometry method, measurement signals can be created that can be applied for determining the structure and/or speed of the running thread (8), **characterised by the fact that**

for the implementation of the laser Doppler anemometry as the reference beam method, the optical dividing and guiding device (4) is equipped in such a way that the laser beam (3) created by the light source (1, 2) is divisible into a reference beam (5a) and a scattering beam (5b) with different intensities, whereby the intensity of the scattering beam (5b) is at least twice as great as the intensity of the reference beam (5a),

that the optical dividing and guiding device (4) is designed in such a way that the exit of the reference beam (5a) and the scattering beam (5b) occurs at an angle (β) that ensures that they cross at the thread (8),

and that the transverse dimension of the reference beam (5a) is greater than the transverse dimension of the running thread (8), wherein that portion of the reference beam which passes the thread (8) is guided into the optical sensor device (9, 10, 11).

**11.** Arrangement according to Claim 10, **characterised by the fact that** the optical dividing and guiding device (4) is constructed in such a way that the laser beam (3) created by the light source (1, 2) is divisible without being focused and the reference beam (5a) and the scattering beam (5b) can be guided to the thread (8) without being focused.

**12.** Arrangement according to Claim 10 or 11, **characterised by the fact that** the dividing and guiding device (4) is constructed in such a way, that the laser beam (3) created by the light source (1, 2) is divisible in such a way that the intensity of the scattering beam (5b) is at least 80%, preferably 90% to 95% of the intensity of the laser beam (3), and that the intensity of the reference beam (5a) is at most 10%, preferably 4% to 5% of the intensity of the laser beam (3).

**13.** Arrangement according to Claims 10 to 12, **characterised by the fact that** upon exiting the dividing and guiding device (4), the reference beam (5a) and the scattering beam (5b) form an angle (β) between each other that lies between 0.5° and 30°, preferably between 3° and 10° and particularly between 4° and 5°.

**14.** Arrangement according to Claims 10 to 13, **characterised by the fact that** the dividing and guiding device (4) comprises two mirror surfaces, of which at least the one first reached by the laser beam (3) is a partially transmissible mirror surface, on which the laser beam (3) is partially reflectable and partially transmittable, whereby at least a part of the sub-beam penetrating through the first surface can be redirected at the second at least partially reflective mirror surface in such a way that it is transmissible through the partially transmissible first mirror surface from the other side.

**15.** Arrangement according to Claims 10 to 14, **characterised by the fact that** the optical dividing and guiding device is formed by a single-piece wedge prism (4).

**16.** Arrangement according to Claim 15, **characterised by the fact that** the reverse side (13) of the wedge prism (4) is reflective.

**17.** Arrangement according to one of Claims 10 to 13, **characterised by the fact that** the dividing and guiding device (4) comprises two mirror surfaces of which at least the one first reached by the laser beam (3) is a partially transmissible mirror surface, on which the laser beam (3) is partially reflectable and partially transmittable, whereby at least a part of the reflected or penetrating sub-beam can be redirected at the second at least partially reflective mirror surface in such a way that the two sub-beams (5a, 5b) meet on the thread (8).

**18.** Arrangement according to one of Claims 10 to 17, **characterised by the fact that** the portion of the reference beam (5a) which passes the thread (8) is guided directly into the optical sensor device (9, 10, 11) without further redirection.

**19.** Arrangement according to one of Claims 10 to 18, **characterised by the fact that** the reference beam (5a) is recordable by a single optical sensor device (9, 10, 11), through which the measurement signals can be created, which can be evaluated for determining the diameter as well as the speed of the thread (8).

**20.** Arrangement according to one of Claims 10 to 19, **characterised by the fact that** the light source is formed by a diode laser module (1), in particular by a VCSEL laser or an edge emitter.

**Revendications**

**1.** Procédé de détermination sans contact de la structure et/ou de la vitesse d'un fil circulant (8) dans le passage à fil (6) d'une machine textile au moyen d'un système de capteur, un rayon laser (3) étant généré par une source lumineuse (1, 2) et celui-ci étant divisé au moyen d'un dispositif optique de division et de déviation (4) servant à diviser et dévier le rayon laser (3) en au moins deux sous-rayons (5a, 5b) se rejoignant au niveau du fil (8), étant générés à partir de la lumière influencée et/ou réfléchie par le fil (8) suivant le procédé d'anémométrie Doppler au laser des signaux de mesure qui sont exploités électroniquement pour déterminer la structure et/ou la vitesse du fil circulant (8),
**caractérisé en ce que**
le procédé d'anémométrie Doppler au laser est réalisé en tant que procédé à rayon de référence, le rayon laser (3) généré par la source lumineuse (1, 2) étant divisé par le dispositif de division et de déviation (4) en un rayon de référence (5a) et un rayon dispersé (5b) à intensités différentes, l'intensité du rayon dispersé (5b) étant au moins le double de l'intensité du rayon de référence (5a),
le rayon laser (3) généré par la source lumineuse (1, 2) est divisé par le dispositif de division et de déviation (4) de manière à ce que le rayon de référence (5a) et le rayon dispersé (5b) se dirigent l'un vers l'autre suivant un angle (β) de manière à se croiser au niveau du fil (8) dès leur sortie du dispositif de division et de déviation (4),
et que la dimension transversale du rayon de référence (5a) est supérieure à la dimension transversale du fil circulant (8), la partie du rayon de référence (5a) passant devant le fil (8) étant déviée dans le système de capteur optique (9, 10, 11) prévu pour réaliser le procédé d'anémométrie Doppler au laser.

**2.** Procédé selon la revendication 1, **caractérisé en ce que** le rayon laser (3) généré par la source lumineuse (1, 2) est divisé sans focalisation par le dispositif de division et de déviation (4) et que le rayon de référence (5a) et le rayon dispersé (5b) sont déviés sans focalisation vers le fil (8).

**3.** Procédé selon la revendication 1 ou 2, **caractérisé en ce que** le rayon laser (3) généré par la source lumineuse (1, 2) est divisé par le dispositif de division et de déviation (4) de manière à ce que l'intensité du rayon dispersé (5b) représente au moins 80 %, de préférence 90 % à 95 % de l'intensité du rayon laser (3) et que l'intensité du rayon de référence (5a) représente au plus 10 %, de préférence 4 à 5 %, de l'intensité du rayon laser (3).

**4.** Procédé selon une des revendications 1 à 3, **caractérisé en ce que** le rayon de référence (5a) et le rayon dispersé (5b), à leur sortie du dispositif de division et de déviation (4), circonscrivent entre eux un angle (β) qui est compris entre 0,5° et 30°, de préférence entre 3° et 10° et en particulier entre 4° et 5°.

**5.** Procédé selon une des revendications précédentes, **caractérisé en ce que** la division du rayon (4) se fait en utilisant deux surfaces de miroir dont au moins la première surface de miroir touchée par le rayon laser (3) est une surface de miroir partiellement transparente sur laquelle le rayon laser (3) est réfléchi partiellement et à travers laquelle il passe partiellement, au moins une partie du sous-rayon passé à travers après déviation au niveau de la deuxième au moins partiellement réfléchissante traversant à nouveau la première surface de miroir partiellement transparente depuis l'autre face.

**6.** Procédé selon une des revendications précédentes, **caractérisé en ce que** le rayon laser (3) est divisé et orienté au moyen d'un prisme conique en une pièce (4).

**7.** Procédé selon une des revendications 1 à 4, **caractérisé en ce que** la division du rayon (4) se fait en utilisant au moins deux surfaces de miroir dont au moins la première surface de miroir touchée par le rayon laser (3) est une surface de miroir partiellement transparente sur laquelle le rayon laser (3) est réfléchi partiellement et à travers laquelle il passe partiellement, au moins une partie du sous-rayon réfléchi ou passé à travers étant dévié au niveau de la deuxième surface de miroir au moins partiellement réfléchissante de manière à ce que les deux sous-rayons (5a, 5b) se rejoignent au niveau du fil (8).

**8.** Procédé selon une des revendications précédentes, **caractérisé en ce que** la partie passant devant le fil (8) du rayon de référence (5a) est guidée sans autre déviation directement dans le système de capteur optique (9, 10, 11) prévu pour la réalisation du procédé d'anémométrie Doppler au laser.

**9.** Procédé selon une des revendications précédentes, **caractérisé en ce que** les parties du rayon de référence (5a) détectées par un unique système de capteur optique (9, 10, 11) sont utilisées aussi bien pour déterminer la vitesse que pour déterminer le diamètre du fil (8).

**10.** Dispositif (A) de détermination sans contact de la structure et/ou de la vitesse d'un fil circulant (8) dans le passage à fil (6) d'une machine textile, comportant une source lumineuse (1, 2) pour générer un rayon laser (3), un dispositif optique de division et de déviation (4) qui permet de diviser le rayon laser (3) en au moins deux sous-rayons (5a, 5b) pouvant se rejoindre au niveau du fil (8), ainsi qu'un système de capteur optique (9, 10, 11) permettant de générer à partir de la lumière influencée et/ou réfléchie par le fil (8) suivant le procédé d'anémométrie Doppler au laser des signaux de mesure qui peuvent être acheminés à une unité d'exploitation pour déterminer la structure et/ou la vitesse du fil circulant (8), **caractérisé en ce que,** pour réaliser le procédé d'anémométrie Doppler au laser en tant que procédé à rayon de référence, le dispositif optique de division et de déviation (4) est réalisé de manière à ce que le rayon laser (3) généré par la source lumineuse (1, 2) puisse être divisé en un rayon de référence (5a) et un rayon dispersé (5b) à intensités différentes, l'intensité du rayon dispersé (5b) étant au moins le double de l'intensité du rayon de référence (5a), le dispositif optique de division et de déviation (4) est réalisé de manière à ce que la sortie du rayon de référence (5a) et du rayon dispersé (5b) hors du dispositif de division et de déviation (4) se fasse suivant un angle (β) l'un par rapport à l'autre tel qu'ils se croisent au niveau du fil (8), et que la dimension transversale du rayon de référence (5a) est supérieure à la dimension transversale du fil circulant (8), la partie du rayon de référence (5a) passant devant le fil (8) étant déviée dans le système de capteur optique (9, 10, 11).

**11.** Dispositif selon la revendication 10, **caractérisé en ce que** le dispositif optique de division et de déviation (4) est réalisé de manière à ce que le rayon laser (3) généré par la source lumineuse (1, 2) puisse être divisé sans focalisation et que le rayon de référence (5a) et le rayon dispersé (5b) puissent être déviés sans focalisation vers le fil (8).

**12.** Dispositif selon la revendication 10 ou 11, **caractérisé en ce que** le dispositif optique de division et de déviation (4) est réalisé de manière à ce que le rayon laser (3) généré par la source lumineuse (1, 2) puisse être divisé de manière à ce que l'intensité du rayon dispersé (5b) représente au moins 80 %, de préférence 90 à 95 %, de l'intensité du rayon laser (3) et que le l'intensité du rayon de référence (5a) représente au plus 10 %, de préférence 4 % à 5 %, de l'intensité du rayon laser (3).

**13.** Dispositif selon une des revendications 10 à 12, **caractérisé en ce que,** entre le rayon de référence (5a) et le rayon dispersé (5b), lors de leur sortie du dispositif de division et de déviation (4), s'étend un angle (β) qui est compris entre 0,5° et 30°, de préférence entre 3° et 10° et en particulier entre 4° et 5°.

**14.** Dispositif selon une des revendications 10 à 13, **caractérisé en ce que** le dispositif de division et de déviation (4) comprend deux surfaces de miroir dont au moins la première surface de miroir touchée par le rayon laser (3) est une surface de miroir partiellement transparente sur laquelle le rayon laser (3) peut être réfléchi partiellement et à travers laquelle il peut passer partiellement, au moins une partie du sous-rayon passé à travers la première surface pouvant être dévié de manière à pouvoir passer depuis l'autre face à travers la première surface de miroir partiellement transparente.

**15.** Dispositif selon une des revendications 10 à 14, **caractérisé en ce que** le dispositif optique de division et de déviation est constitué par un prisme conique (4) en une pièce.

**16.** Dispositif selon la revendication 15, **caractérisé en ce que** la face arrière (13) du prisme conique (4) est pourvue de miroir.

**17.** Dispositif selon une des revendications 10 à 13, **caractérisé en ce que** le dispositif de division et de déviation (4) comprend deux surfaces de miroir dont au moins la première surface de miroir touchée par le rayon laser (3) est une surface de miroir partiellement transparente sur laquelle le rayon laser (3) peut être réfléchi partiellement et à travers laquelle il peut passer partiellement, au moins une partie du sous-rayon réfléchi ou passé à travers pouvant être déviée au niveau de la deuxième surface de miroir au moins partiellement réfléchissante de manière à ce que les deux sous-rayons (5a, 5b) se rejoignent au niveau du fil (8).

**18.** Dispositif selon une des revendications 10 à 17, **caractérisé en ce que** la partie passant devant le fil (8) du rayon de référence (5a) est guidée sans autre déviation directement dans le système de capteur optique (9, 10, 11).

**19.** Dispositif selon une des revendications 10 à 18, **caractérisé en ce que** le rayon de référence (5a) peut être détecté par un unique système de capteur optique (9, 10, 11) qui permet de générer des signaux de mesure qui sont exploitables aussi bien pour déterminer la vitesse que pour déterminer le diamètre du fil (8).

**20.** Dispositif selon une des revendications 10 à 19, **caractérisé en ce que** la source lumineuse est constituée par un module laser à diodes (1), en particulier par un laser VCSEL ou à diodes électroluminescentes à émission par les bords.

Fig. 1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10342383 A1
- DE 4225842 A1
- EP 0838695 A1
- DE 19648713 A1